Europäisches Patentamt

European Patent Office

Office européen des brevets

(11) Veröffentlichungsnummer: **0 314 827**

**A1**

## EUROPÄISCHE PATENTANMELDUNG

(21) Anmeldenummer: **87116172.5**

(22) Anmeldetag: **03.11.87**

(51) Int. Cl.⁴: **A23F 5/04**

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **Probat-Werke von Gimborn GmbH
& Co. KG
Reeser Strasse 94
D-4240 Emmerich 1(DE)**

(72) Erfinder: **von Gimborn, Carl Hans
Eltener Strasse 8
D-4240 Emmerich(DE)**
Erfinder: **Finken, Hermann, Dipl.-Ing.
Mathäus Merian-Strasse 11
D-4240 Emmerich(DE)**
Erfinder: **Jansen, Gerhard
Korensingel 22
NL-7041 JH s-Heerenberg(NL)**

(74) Vertreter: **Fincke, Karl Theodor, Dipl.-Phys.Dr.
et al
Patentanwälte Dipl.-Ing. H.Weickmann
Dipl.-Phys.Dr. K.Fincke Dipl.-Ing.
F.A.Weickmann Dipl.-Chem. B. Huber Dr. Ing.
H. Liska Dipl.-Phys.Dr. J. Prechtel
Möhlstrasse 22
D-8000 München 80(DE)**

(54) Verfahren zum Kühlen vn röstheissem, körnigem, rieselfähigem Gut.

(57) Die Erfindung betrifft ein Verfahren zum Kühlen von röstheißem, körnigem, rieselfähigem Gut, insbesondere zum Kühlen von röstheißen Kaffeebohnen durch direkten Wärmeaustausch mit einem Kühlmittel in einer Kühlvorrichtung, der das Gut aus einer Röstvorrichtung zugeführt wird, das dadurch gekennzeichnet ist, daß als Kühlmittel in einem Treibgas verteilte, von dem Gut zu verdunstende Wassertröpfchen verwendet werden.

Fig. 1

## Verfahren zum Kühlen von röstheißem, körnigem, rieselfähigem Gut

Die Erfindung betrifft ein Verfahren nach dem Oberbegriff des Anspruchs 1.

Stand der Technik ist in dem 1984 erschienen Buch "Kaffee Der Verbrauch" von Bernhard Rothfos, in Verbindung mit verschiedenen Röstmaschinen, beschrieben.

Bei herkömmlichen Verfahren zur Kühlung von Röstkaffee wird dieser im eigentlichen Röstbehälter bei Erreichen der Röstendtemperatur mit eingespritztem Wasser vorgekühlt und/oder außerhalb des Röstbehälters in einer Kühlvorrichtung mit Kaltluft, die durch das Röstgut geführt wird, auf annähernd Umgebungstemperatur abgekühlt. Diese Verfahren können kontinuierlich oder chargenweise durchgeführt werden. Es handelt sich stets um eine Kühlung durch erzwungene Konvektion. Das Kühlmedium ist dabei aus der Umgebung angesaugte Luft, die nicht besonders aufbereitet wird. Die Volumenströme sind relativ groß; sie werden nach der Wärmeaufnahme in Fliehkraftabscheidern entstaubt und über Ventilatoren und Kamine ins Freie abgeführt. Diese Verfahren haben u. a. folgende Nachteile:

a) Dem frischen Röstkaffee werden bei der Kühlung große Mengen Luftsauerstoff angeboten. Der Kaffee adsorbiert und verzehrt durch chemische Bindung dabei begierig Sauerstoff. Daher werden im Kaffee Oxidationsprodukte gebildet. Diese wirken sich auf eine Verschlechterung der Aroma- und Geschmacksentwicklung aus. Insbesondere nimmt der Kaffee dadurch sehr schnell den sogenannten Altgeschmack an und seine Haltbarkeit wird verkürzt.

b) Röstkaffee ist sehr empfindlich gegen Fremdaroma. Allgegenwärtige Luftbegleitstoffe verursachen qualitätsmindernde Überlagerungen beim Aroma und Geschmack des luftgekühlten Kaffees.

c) Frisch gerösteter Kaffee ist sehr hygroskopisch. Sein Endwassergehalt darf gesetzlich festgelegte Grenzwerte nicht übersteigen. Jahreszeitlich wie tageszeitlich bedingte Schwankungen der relativen Luftfeuchtigkeit und der Lufttemperatur wirken sich bei der Luftkühlung unkontrolliert auf die Endfeuchte des Kaffees aus.

d) Die Wärme abführende Luft aus der Kühlvorrichtung ist mit Staub- und Geruchsemissionen beladen. Auch nach der mechanischen Reinigung belastet diese Luft, im Rahmen des Zulässigen, die Umwelt.

e) Jede Intensivierung der Vorkühlung mit Wasser im Röstbehälter verursacht eine Erhöhung des spezifischen Energiebedarfs für die Röstung, sowie Röstprozeßverlängerung und Erhöhung der Verluste durch Einbrand.

Nach der DE-PS 21 03 281 und der DE-PS 23 41 099 sind Einrichtungen zur Wärme-, Kälte- und/oder Stoffbehandlung eines körnigen, rieselfähigen Guts, insbesondere zum Rösten von Kaffee oder Kakao bekannt, bei denen der Behandlungsstrom erhitzte Luft ist, die mit erhöhter Geschwindigkeit zugeführt wird.

Aufgabe der Erfindung ist es, ein Verfahren nach dem Oberbegriff des Anspruchs 1 anzugeben, das mit verhältnismäßig geringem Energieaufwand schnell und gleichmäßig das Gut kühlt, dabei vor Sauerstoff und Fremdaroma schützt und verhältnismäßig wenig Emissionen freisetzt. Die Lösung dieser Aufgabe ist in Anspruch 1 angegeben.

Durch das erfindungsgemäße Verfahren erfolgt eine Verdunstungskühlung des Guts unter weitgehendem Ausschluß von Kühlluft. Die verdampfenden Wassertröpfchen schützen das Gut weitgehend bei der Kühlung vor der Einwirkung von Sauerstoff. Bevorzugt erfolgt dabei die Kühlung in einem gesonderten geschlossenen Kühlbehälter.

Besonders bevorzugt sind die Treibgase nach Anspruch 2 und/ oder 3 und/oder 4. Druckluft als Treibgas kann verwendet werden, weil das Gut bei seiner Kühlung durch das verdunstende Wasser weitgehend vor Sauerstoff geschützt ist. Ein besonders sicherer Schutz wird durch Inertgas erzielt. Die Verwendung von Röstabgas ist besonders rationell.

Bevorzugt ist die Verwendung von Wassertröpfchen, die nach Anspruch 5 gebildet werden. Das Wasser kann teilentsalzt oder nach anderen an sich bekannten Verfahren vorbehandelt werden.

Die Bildung der Wassertröpfchen erfolgt bevorzugt nach Anspruch 6. Zum Zerstäuben können mit Druckluft betriebene Druckzerstäuber verwendet werden oder auch mit komprimiertem Inertgas betriebene Druckzerstäuber. Dabei ist darauf zu achten, daß die Wassertröpfchen möglichst gleichmäßig im Kühlbehälter vernebelt werden.

Um eine gewünschte Endfeuchtigkeit des gekühlten Guts herbeizuführen, ist bevorzugt eine Ausbildung nach Anspruch 7 vorgesehen.

Eine besonders gleichmäßige Kühlung des Guts enthält man nach Anspruch 8, weil dadurch das Gut gleichmäßig mit den Wassertröpfchen benetzt wird. Zum Verwirbeln und zum Umwälzen können bekannte Vorrichtungen verwendet werden, bevorzugt eine sich drehende Trommel oder ein Schneckenrohrförderer oder eine sich drehende Schale oder sich drehende Schaufelräder oder schwingende Flächen.

Um zu verhindern, daß das verdunstete Wasser kondensiert, ist bevorzugt eine Ausbildung nach Anspruch 9 vorgesehen. Dem gleichen Zweck dient die Ausbildung nach Anspruch 10 und die Ausbildung nach Anspruch 11. Bei der Ausbildung nach Anspruch 11 wird der Wasserdampf und das Treibgas noch innerhalb der Kühlvorrichtung dem Teilstrom Röstabgas durch Einbauten im Kühlbehälter zugeführt. Die Förderung des Röstabgases kann dabei mittels eines Ventilators geschehen, der das Röstabgas aus einem Kamin der Röstvorrichtung ansaugt und den genannten Einbauten zuführt. Besonders wirksam hat sich dabei die Ausführung nach Anspruch 12 erwiesen.

Eines besonders geringen Bedienungsaufwands bedarf die Ausbildung nach Anspruch 13.

Mit dem Verfhren insgesamt läßt sich der Endfeuchtegehalt von Kaffee auf einen gewünschten Sollwert selbsttätig regulieren. Durch die Kühlung des Kaffees entstehen lö praktisch keine Emissionen. Die Aufnahme von Sauerstoff und Fremdaroma durch den Kaffee wird verhindert. Der Kaffee wird, wie es nach einer Röstung, insbesonder einer Kurzzeitröstung, des Kaffees notwendig ist, schnell abgekühlt und überdies gleichmäßig abgekühlt, ohne daß es zu einer unerwünschten Nachröstung kommen kann. Da der Wärmeabtransport aus der Kühlvorrichtung durch kombinierten Energie- und Stofftransport von Wasserdampf in Röstabgas als Trägermedium geschieht, ist eine Beeinflussung des Kaffeearomas durch artfremdes Gas ausgeschlossen. Der Abgasstrom des Röstgases wird wieder in den Kamin der Röstvorrichtung zurückgeführt. Die Kühlvorrichtung bildet daher keine Emissionsquelle, ein gesonderter Kamin und besonders leistungsstarke Kühlluftventilatoren erübrigen sich. Der Wasserverbrauch für das erfindungsgemäße Verfahren ist nicht höher als bei der Vorkühlung im Röstbehälter nach herkömmlichen Verfahren.

Die Erfindung wird im folgenden an zwei Ausführungsbeispielen erläutert.

Fig. 1 zeigt schematisch eine erste Ausführungsform der Kühlvorrichtung, Fig. 2 einen Teilschnitt davon.

Fig. 3 zeigt schematisch eine mit einer Röstvorrichtung kombinierte, kontinuierlich arbeitende Kühlvorrichtung.

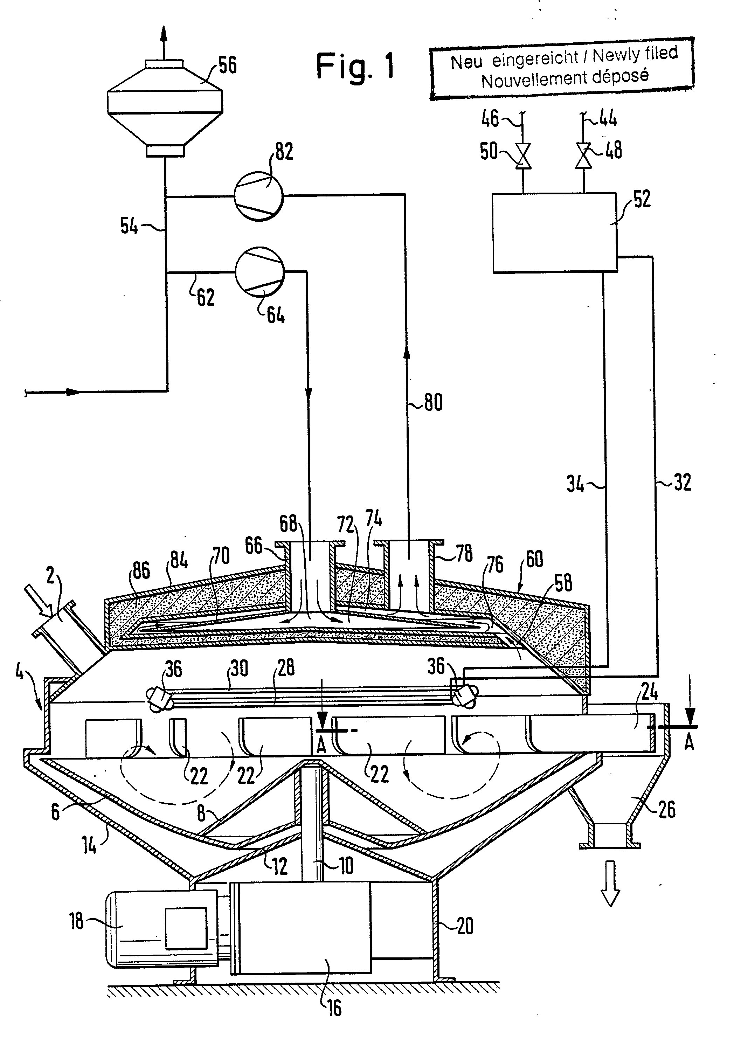

Bei der Ausführungsform nach Fig. 1 gelangt von einer Röstvorrichtung kommender Kaffee durch einen Stutzen 2 in einen Kühlbehälter 4 von im Horizontalschnitt im wesentlichen rundem Querschnitt. In dem Kühlbehälter 4 befindet sich zentrisch eine nach oben offene Schale 6 mit einem konischen Mittelstück 8. Die Schale 6 sitzt am oberen Ende einer Welle 10, die einen nach oben konischen Abschnitt 12 des Bodens 14 des Behälters 4 abgedichtet durchsetzt und über ein Getriebe 16 von einem Motor 18 angetrieben wird, der an einem Gestell 20 der Kühlvorrichtung befestigt ist. Oberhalb der Schale 6 sind an der Innenwand des Behälters 4 bogenförmige Rippen 22 angebracht, die durch Fliehkraftwirkung über den Rand der Schale 6 hinausgeförderte Kaffeebohnen umlenken und in den mittleren Bereich der Schale 6 zurücklenken, von wo aus sie auf das konische Mittelstück 8 fallen.

Zur Abführung der Kaffeebohnen aus der umlaufenden Schale 6 sind eine oder mehrere gesonderte Rippen 24 vorgesehen, die an einem horizontal ausschwenkbaren Segment des Behälters 4 angebracht sind und nach ihrem Einschwenken über den Rand der Schale 6 durch Fliehkraft geförderte Kaffeebohnen in einen Auslauftrichter 26 umlenken.

Oberhalb der Rippen 22 und 24 befinden sich in dem Behälter 4 zwei Ringrohre 28, 30, von denen das Ringrohr 28 über eine Leitung 32 mit Wasser gespeist wird und von denen das Ringrohr 30 über eine Leitung 34 mit Treibgas gespeist wird. An den beiden Ringrohren 28, 30 sitzen in Umfangsrichtung verteilt mehrere Zerstäuberdüsen 36, aus denen Treibgas und Wassertröpfchen in den Behälter 4 austreten.

Die Zufuhr des Wassers in die Leitung 32 und des Treib gases in die Leitung 34 erfolgt über Leitungen 44, 46 und Stellventile 48, 50 und ein Steuergerät 52.

Aus der nicht dargestellten Röstvorrichtung wird Röstabgas über einen Kamin 54 und einen Katalysator 56 ins Freie abgeführt.

Aus dem Behälter 4 tritt Wasserdampf, der durch Verdunstung der Wassertröpfchen entstanden ist, zusammen mit dem Treibgas durch mehrere am Umfang verteilte Öffnungen 58 in einen thermisch isolierten Deckel 60 des Behälters aus. Der Deckel 60 ist durch einen Blechmantel 84 mit einer Isolierstoffüllung 86 gebildet. Zur Förderung und Aufheizung des Wasserdampfes und des Treibgases zwecks Verhinderung der Kondensation des Wasserdampfes dient Röstabgas, das über eine Leitung 62 von dem Kamin 54 abgeführt ist und mittels eines Ventilators 64 in einen zentralen Stutzen 66 des Deckels eingeführt ist. Der Stutzen 66 endet innerhalb des Deckels 60 in einem Raum 68, der durch ein flachkonisches Ringblech 70 in einen unteren scheibenförmigen Bereich 72 und einen oberen ringförmigen Bereich 74 unterteilt ist. Das Röstabgas strömt in Richtung der Pfeile um die Außenkante des Ringblechs 70 herum, nimmt aus dem Bereich 76 hinter den Öffnungen 58 Wasserdampf und Luft mit und fördert sie durch einen Stutzen 78 im Deckel 60, der im Bereich 74 mündet, über eine Leitung 80, in der sich ein Ventilator 82 befindet, zurück in den Kamin 54 stromabwärts der Leitung 62 und stromaufwärts des Katalysators 56.

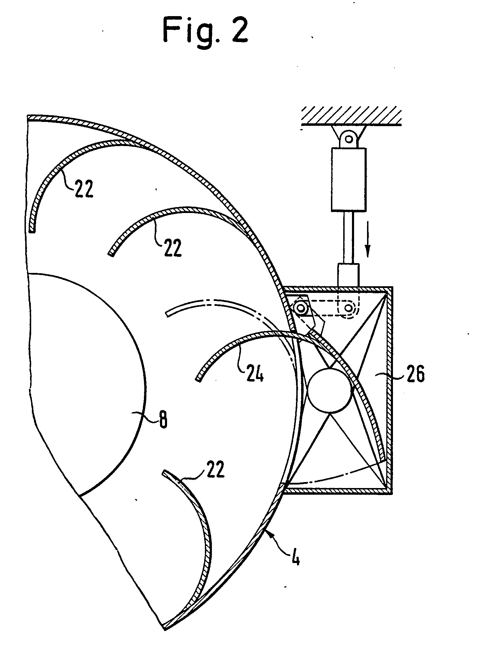

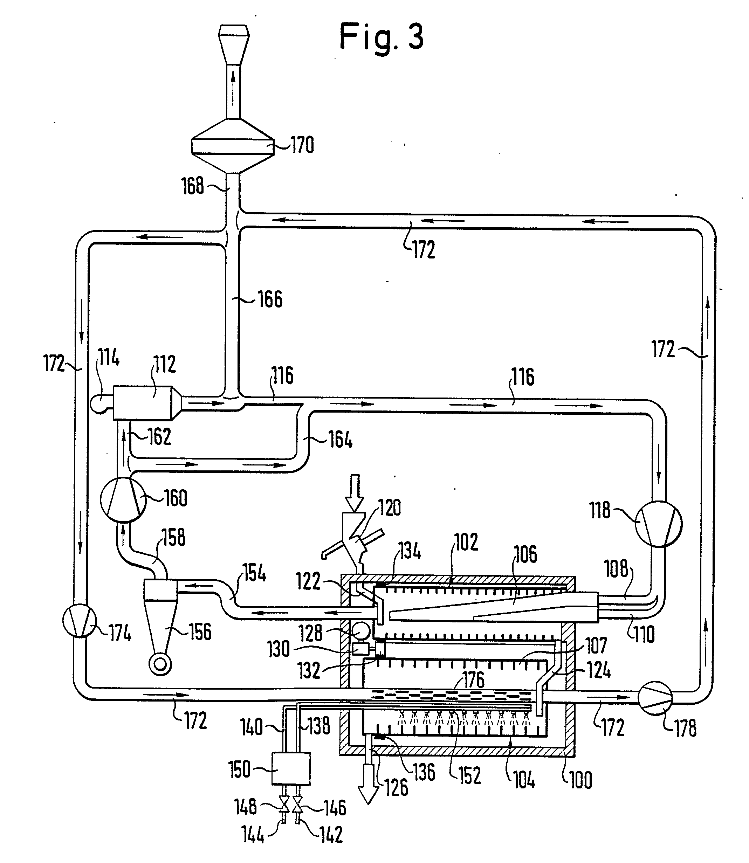

Die Ausführungsform nach Fig. 3 weist einen thermisch isolierten Behälter 100 auf, in dessen oberem Bereich eine Rösttrommel 102 und in dessen unterem Bereich eine Kühltrommel 104 umläuft. In die Rösttrommel 102 ragt ein Düsenstock 106, der über Leitungen 108 und 110 mit Heizgas beschickt wird. Das Heizgas kommt aus einem Ofen 112, der mit einem Brenner 114 aufgeheizt wird, über eine Leitung 116 und einen Ventilator 118. In die Rösttrommel 102 gelangt zu röstender Kaffee über ein chargenweise steuerbares Einfüllgerät 120 mit einer Auslaßleitung 122, die in der Rösttrommel 102 mündet. Aus der Rösttrommel 102 wird der geröstete Kaffee über eine Leitung 124 in die Kühltrommel 104 eingeführt. Die Kühltrommel 104 ist in Kammern 106 geteilt. Bei Drehung der Kühltrommel 104 wird der geröstete zu kühlende Kaffee von Kammer zu Kammer in der Darstellung der Fig. 2 von rechts nach links zu einer Auslaufleitung 126 gefördert. Der Antrieb der Rösttrommel 102 und der Kühltrommel 104 erfolgen simultan durch einen Motor 128 über ein Getriebe 130, das ein Ritzel 132 antreibt. Dieses Ritzel 132 greift sowohl in einen Zahnkranz 134 auf dem Umfang der Rösttrommel 102, als auch in einen Zahnkranz 136 auf dem Umfang der Kühltrommel 104 ein.

In die Kühltrommel 104 ragen in Längsrichtung eine Rohrleitung 138, die mit Wasser gespeist wird, und eine Rohrleitung 140, die mit Treibgas gespeist wird. Die Speisung erfolgt über Zuführungsleitungen 142, 144, in denen sich Stellventile 146 und 148 befinden, über ein Steuergerät 150. Die beiden Rohrleitungen 138 und 140 speisen Zerstäuberdüsen 152, aus denen Wassertröpfchen und Treibgas nach unten in die Kammern 106 und somit auf den durch die Kammern geförderten gerösteten Kaffee austritt.

Aus der Rösttrommel 102 wird Röstabgas durch eine Leitung 154 abgeführt und gelangt über einen Zyklon 156 mit einer Abführungsleitung 158 und einen Ventilator 160 über eine erste Zweigleitung 162 in den Ofen und über eine zweite Zweigleitung 164 in die Leitung 116. Von der Leitung 116 ist eine Leitung 166 abgezweigt, die über einen Kamin 168 und einen Katalysator 170 ins Freie führt. Von der Leitung 166 bzw. dem Kamin 168 ist eine Leitung 172 abgezweigt, die über einen Ventilator 174 in den Behälter 100 eingeführt ist, wo sie die Kühltrommel 104 axial durchsetzt. Innerhalb der Kühltrommel 104 befinden sich in der Leitung 172 schlitzförmige Öffnungen 176, durch die Wasserdampf und Treibgas eintreten kann. Damit dies geschieht, ist stromabwärts außerhalb des Behälters 100 in der Leitung 172 ein Ventilator 178 vorgesehen. Die Leitung 172 mündet stromabwärts des Ventilators 178 in dem Kamin 168.

## Ansprüche

1. Verfahren zum Kühlen von röstheißem, körnigem, rieselfähigem Gut, insbesondere zum Kühlen von röstheißen Kaffeebohnen durch direkten Wärmeaustausch mit einem Kühlmittel in einer Kühlvorrichtung, der das Gut aus einer Röstvorrichtung zugeführt wird, **dadurch gekennzeichnet**, daß als Kühlmittel in einem Treibgas verteilte, von dem Gut zu verdunstende Wassertröpfchen verwendet werden.

2. Verfahren nach Anspruch 1, dadurch gekennzeichnet, daß als Treibgas Druckluft verwendet wird.

3. Verfahren nach Anspruch 1, dadurch gekennzeichnet, daß als Treibgas Inertgas verwendet wird.

4. Verfahren nach Anspruch 1, dadurch gekennzeichnet, daß als Treibgas komprimiertes Röstabgas aus der Röstvorrichtung verwendet wird.

5. Verfahren nach einem der vorstehenden Ansprüche, dadurch gekennzeichnet, daß die Wassertröpfchen aus Wasser mit Trinkqualität gebildet werden.

6. Verfahren nach einem der vorstehenden Ansprüche, dadurch gekennzeichnet, daß zur Bildung der Wassertröpfchen in der Kühlvorrichtung Wasser mit unter Druck stehendem Treibgas zerstäubt wird.

7. Verfahren nach einem der vorstehenden Ansprüche, dadurch gekennzeichnet, daß die Menge der der Kühlvorrichtung zugeführten Wassertröpfchen und/oder die Menge des der Kühlvorrichtung zugeführten Treibgases nach Maßgabe der gewünschten Endfeuchtigkeit des gekühlten Guts geregelt wird.

8. Verfahren nach einem der vorstehenden Ansprüche, dadurch gekennzeichnet, daß das zu kühlende Gut in der Kühlvorrichtung verwirbelt und/oder umgewälzt wird.

9. Verfahren nach einem der vorstehenden Ansprüche, dadurch gekennzeichnet, daß die Kühlvorrichtung einen thermisch isolierten Kühlbehälter aufweist, in dem die Kühlung des Guts erfolgt.

10. Verfahren nach einem der vorstehenden Ansprüche, dadurch gekennzeichnet, daß durch die Kühlung des Guts entstehender Wasserdampf zusammen mit Treibgas bei Temperaturen oberhalb der Kondensationstemperatur des Wasserdampfs aus der Kühlvorrichtung über einen Abgasreiniger ins Freie abgeführt wird.

11. Verfahren nach Anspruch 10, dadurch gekennzeichnet, daß der Wasserdampf und das Treibgas vor ihrer Abführung aus der Kühlvorrichtung durch Zumischen von einem Anteil Röstabgas aus der Röstvorrichtung aufgeheizt werden.

12. Verfahren nach Anspruch 10 oder 11, dadurch gekennzeichnet, daß das Gemisch aus Wasserdampf, Treibgas und Röstabgas - wobei letzteres als Trägergas fungiert in Fließrichtung vor dem Abgasreiniger in den Kamin eingeleitet wird, um dann zusammen mit dem zweiten Teilstrom Röstabgas aus der Röstvorrichtung den Abgasreiniger zu durchströmen und danach ins Freie abzuströmen.

13. Verfahren nach einem der vorstehenden Ansprüche, dadurch gekennzeichnet, daß die Kühlvorrichtung synchron mit der Röstvorrichtung betrieben wird.

# Fig. 1

PROBAT-WERKE

# Fig. 2

# Fig. 3

| | Europäisches Patentamt | EUROPÄISCHER RECHERCHENBERICHT | Nummer der Anmeldung |
|---|---|---|---|
| | | | EP 87 11 6172 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 428 241 (ARALEY)<br>* Anspruch 1; Seite 1, Zeilen 1-29 *<br>--- | 1,2,5,6<br>,7,13 | A 23 F 5/04 |
| X | FR-A-1 473 109 (HUPP CORP.)<br>* Zusammenfassung, Punkte 1,12,13,14;<br>Seite 8, Spalte 2; Seite 12; Seiten<br>21-22; Figuren 9B,19 *<br>--- | 1,2,6-9<br>,13 | |
| X | FR-A-1 182 626 (L. FORESTI)<br>* Zusammenfassung, Punkte 1,2f,g; Seite<br>2, Spalte 2 - Seite 1, Spalte 1; Figur<br>1 *<br>--- | 1,2,5,6<br>,7,13 | |
| X | US-A-2 099 945 (P. SIMPSON)<br>* Ansprüche 1-4; Seite 2, Spalte 1,<br>Zeile 29 - Spalte 3, Zeile 35; Seite 1,<br>Spalte 2, Zeilen 36-52 *<br>----- | 1,2,5-8<br>,13 | |

| | RECHERCHIERTE SACHGEBIETE (Int. Cl.4) |
|---|---|
| | A 23 F<br>A 23 N<br>A 23 B |

Der vorliegende Recherchenbericht wurde für alle Patentansprüche erstellt

| Recherchenort | Abschlußdatum der Recherche | Prüfer |
|---|---|---|
| DEN HAAG | 04-07-1988 | DESMEDT G.R.A. |

EPO FORM 1503 03.82 (P0403)